# EUROPEAN PATENT APPLICATION

(11) **EP 0 821 879 A1**
(43) Date of publication of application: **04.02.1998**
(21) Application number: 97113304.6
(22) Date of filing: 01.08.1997
(51) Int. Cl.: A23C 19/00, A01J 25/08

(54) **Method and apparatus for extracting a dairy product from whey, in particular ricotta**

(30) Priority: 01.08.1996 IT CA960015
(71) Applicant: Sassu, Antonio, 07013 Mores (Sassari) (IT)
(72) Inventor: Sassu, Antonio, 07013 Mores (Sassari) (IT)
(74) Representative: Luppi, Luigi

(57) **Abstract**

The method for extraction a dairy product from whey comprises the heating and agitating a liquid comprising said whey in an agglomeration station (1) in such a way as to obtain progressively substantially solid parts (2A; 13, 13A) of product floating in said liquid, transferring said parts (2A; 13, 13A) from said agglomeration station (1) to an extraction station (5) and subsequently extracting said parts (2A; 13, 13A) from said liquid; the apparatus comprises heating means arranged to heat and agitating means arranged to agitate a liquid (2) comprising said whey in an agglomeration station (1) in such a way as to allow the progressive production of substantially solid parts (2A; 13, 13A) of product floating in said liquid, transferring means (10, 10A, 10B, 10C) arranged to transfer said parts (2A; 13, 13A) from said agglomeration station to an extraction station (5) and extracting means (9, 6, 7) arranged to extract said parts (2A; 13, 13A) from said liquid.

## Description

This invention refers to production of dairy products, in particular ricotta.

The traditional systems for producing ricotta, in particular "ricotta gentile", comprise heating and mixing of whey and extracting curdled parts constituting parts of ricotta by means of a manually-driven ladle operated by specialized personel who introduces those parts into suitable containers.

These traditional systems are very slow and expensive: for example to extract the amount of ricotta producted in a mass of whey of about 1500 litres two persons have to work for about 20 minutes.

The traditional systems may only be run by specialized and skilled staff, in particular because, in addition to difficulties concerning the manner in which whey is agitated, handling of the curdled parts of ricotta has to be made with extreme delicacy in such a way as not to broke them, because this would cause their irreversible dispersion in the liquid.

Moreover, if traditional systems are not run with particular skillness, the obtained product has a quality variable between the begin and the end of the curdling process: in fact the first parts which curdle have are more tasty because are richer in fats than the parts which curdle last. Thus, a product having features which are on the average costant starting form a mass of whey, may only be obtained if the operator fills the containers introducting into them an almost costant proportion of ricotta taken at the begin of the curdling process, during the curdling process and at the end of the curdling process.

The production of ricotta takes place into dairy plants from whey. In such plants the available quantity of whey resulting from preceding productions of milk is very high and the processing of such a great quantity of whey constitutes an important productive problem.

The invention is aimed at improving the exsistent systems for the processing of whey.

According to a first aspect of the present invention, there is provided a method for extracting dairy product from whey comprising the phases of:
- heating and agitating a liquid comprising said whey at an agglomeration station in such a way as to progressively obtain substantially solid parts of product floating in said liquid;
- extracting said parts from said liquid;
   characterized in that it further comprises, before said extracting, transferring said parts from said agglomeration station to an extraction station.

In one embodiment, the parts of product may be transferred from the agglomeration station to the extraction station while they agglomerate in the liquid mass of whey.

In a further particularly advantageous embodiment, the parts of product are transferred from the agglomeration station to the extraction station after they have formed a layer floating on the liquid mass in the agglomeration station.

In a second aspect of the present invention, there is provided apparatus for extracting a dairy product from whey comprising:
- heating means arranged to heat a liquid and agitating means arranged to agitate said liquid, said liquid comprising said whey at an agglomeration station in such a way as to allow progressive agglomeration of substantially solid parts of product floating in said liquid;
- extracting means arranged to extract said parts from said liquid;
   characterized in that said agglomeration station further comprises transferring means arranged to transfer said parts from said agglomeration station to an extraction station in which said extracting means interact with said parts.

Owing to these aspects of the invention, it is possible to extract ricotta from whey in an extreme quick way.

In fact, firstly, a layer containing all of the ricotta which can be obtained from a given quantity of whey, may be produced and subsequently such layer may be processed for the packaging.

Preferibly, the layer of product cooperates with conveyor means which are lifted from the bottom to cut the layer and pour portions separated from the layer into respective underneath containers.

Therefore, the layer of product is processed very gently, thereby obtaining high quality.

Moreover, since the layer of product is formed by floating on the whey and may be processed while all of the ricotta contained in the whey is curdled, the layer has a substantially omogeneous composition.

This allows the finished product to have omogeneous taste.

In order that the invention may be better understood and carried into effect, an embodiment is now described - by way of example - with reference to the attached drawings, in which:
- Figure 1 is a schematic perspective view of a machine for extracting ricotta from whey;
- Figure 2 is a schematic section taken along the line II-II of Figure 1, during a first phase of formation of a layer of product;

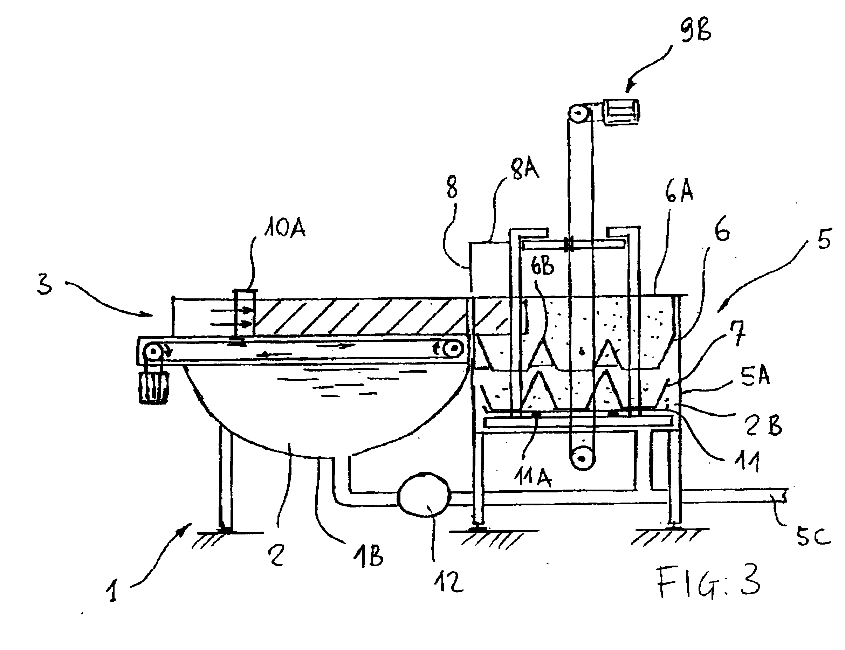

- Figure 3 is a section as in Figure 2, but during transferring the layer;
- Figure 4 is a section as in Figure 2, but in a further phase in which the transferring of the layer has occurred, but conveyor means have not yet begun to separate the layer;
- Figure 5 is a section as in Figure 4, but in a further phase in which conveyor means are lifted to cause pouring of ricotta into basket containers;
- Figure 6 is a section as in Figure 5, but in a last phase in which the basket containers are taken out from the extraction station for unloading the extracted ricotta.

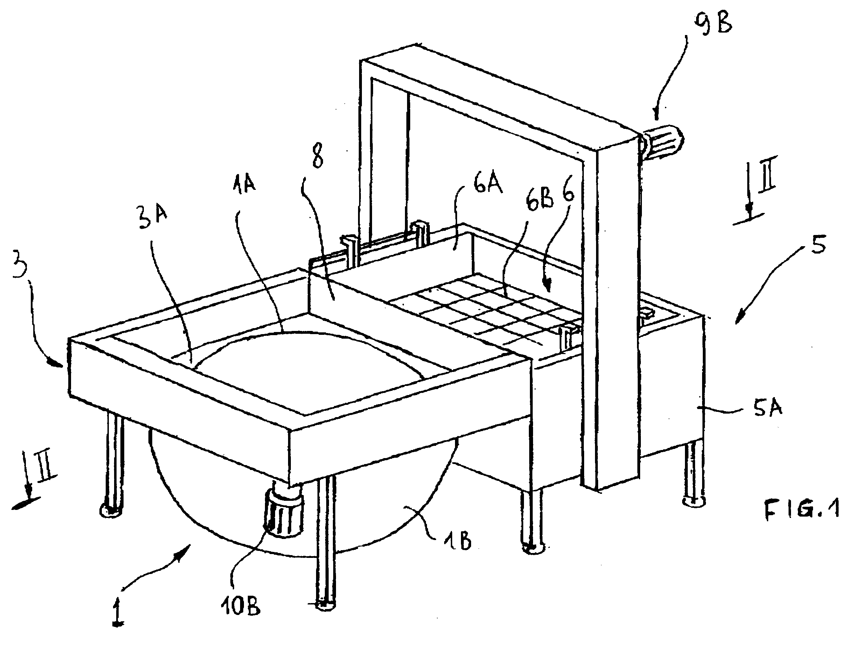

As shown in Figure 1, in a first container 1B, vantageously a container with an hollow chamber, a quantity of whey is heated. On a higher edge 1A of the first container 1B side means 3 are fixed by interposition of linking means 3A comprising a sealing gasket arranged to avoid leaking of whey.

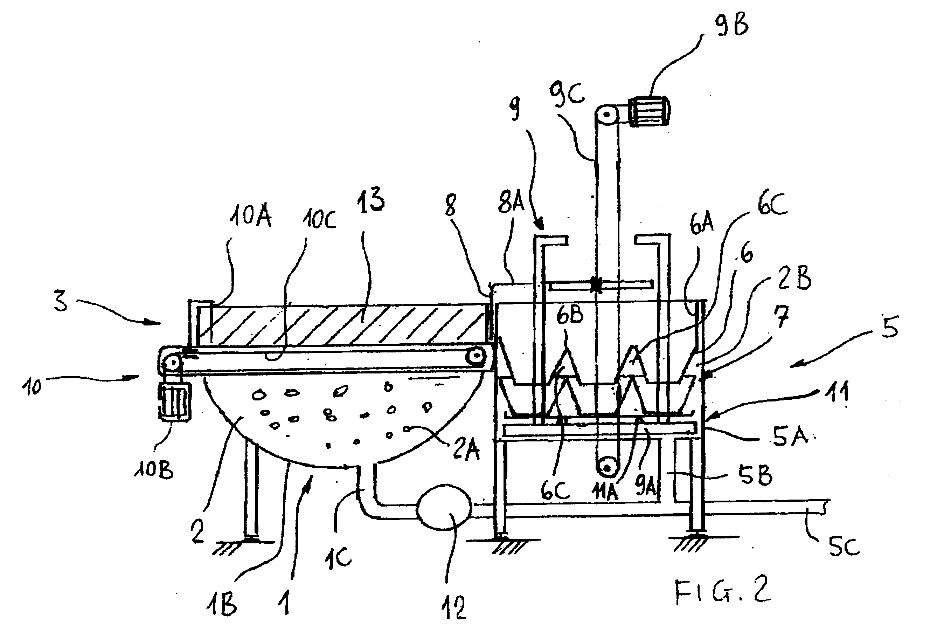

The first container 1B defines an agglomeration station 1 of whey 2 (Figure 2) in which parts 2A of ricotta are formed and subsequently move upward until float in the whey 2.

Sideways on the agglomeration station 1 there is provided an extraction station, or extraction head, 5 provided with hydraulic sealing gaskets, in which the parts 2A of ricotta are extracted from an auxiliary liquid 2B contained in a second container 5A of the extraction station 5.

The auxiliary liquid 2B may be whey, or - more advantageously - hot water or "scotta", i.e. whey in which the ricotta has been already extracted.

Between the side means 3 and the second container 5A is interposed a shutter 8, which may be lifted, or pulled down through electric, or pneumatic, driving means - not shown - arranged respectively to lift the shutter 8 from the liquid thus rendering the containers 1B and 1A communicating on their upper sections, or to isolate them at their upper sections in such a way that parts 2A of ricotta are not moved toward the second container 5A when this is not required.

In particular the parts 2A of ricotta may advantageously form, in the agglomeration station 1, a layer 13 containing substantially all of the ricotta extractable from the whey 2.

The container 5A has parallelepiped shape and contains a plurality of basket containers 7 for ricotta, coupled in an extractable way with, particularly supported on, shelf means 11, the shelf means 11 and the basket means 7 being provided with openings which are wide enough to let auxiliary liquid flow. On a portion of bottom of the second container 5A is obtained a passage 5B of liquid controlled by a valve and connected, by conduit means, with an analogous passage 1C obtained on the bottom of the first container 1B. On the conduit means which interconnect the passages 5B, 1C is interposed a pump 12 for circulating the liquid. A branch 5C of the conduit means allows unloading of the liquid for the emptying of the containers 1B, 5A.

The second container 5A is provided with feet adjustable in heigh to allow an efficacious and precise coupling with first existent containers 1B, in a wide range of heighs thereof.

Above the basket containers 7 inside of the second container 5A are placed conveyor and subdivision means 6 to convey the parts of ricotta toward the basket means 7 and to sever the layer 3, once it is formed, in portions 13A suitable to be introduced into the underneath basket means.

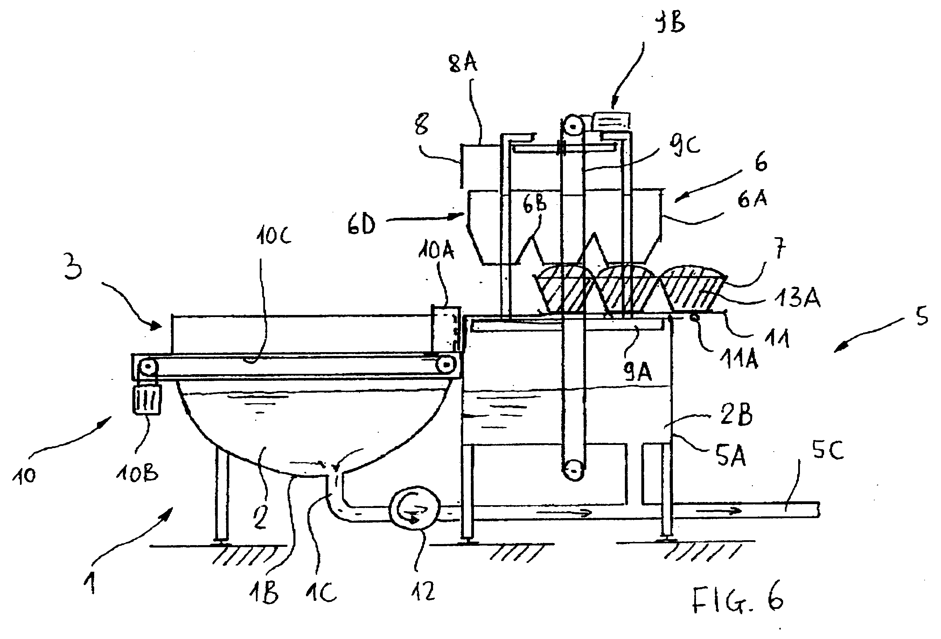

The conveyor means 6 comprise a purality of hopper means internally defining chamber converging downward and disposed above the openings of respective basket means 7, said hopper means having a profile such as not to cause the layer 13 have shocks, or breakings and being provided with lateral walls 6A which receive the layer 13 when it gets to the extraction station 5 from the agglomeration station 1. The conveyor means are further provided with edges 6B arranged to sever the layer into portions when the conveyor means are lifted and with an opening 6D (Figure 6) facing the first container 1B to let the layer 3, or the parts 2A, coming from the agglomeration station 1, pass. The conveyor means have also ribs 6C arranged to rest on the upper edges of the basket-containers 7, in such a way as to keep them pressed on the shelf means 11.

There are also provided lifting means for lifting the basket means 7 and the conveyor means 6 comprising movable frame means 9 extending with one of their lower portion 9A below the shelf means 11 in such a way as to be able to lift them together with the conveyor means when the movable frame means 9 are lifted by driving means 9B, for example an electric engine, or pneumatic or hydraulic driving means, coupled with the movable frame means 9 by transmission means 9C.

Between the lower portion 9A of the movable frame means 9 and the shelf means 11 are interposed rolling means 11A, for example rolls, arranged to allow moving of the shelf means 11 with respect to the frame means 9 in a substantially horizontal plane when unloading of the ricotta from the extraction station is necessary.

Also the shutter 8 may be coupled with the movable frame means 9 by a shelf 8A, so as to result driven to lift by means of these lifting means.

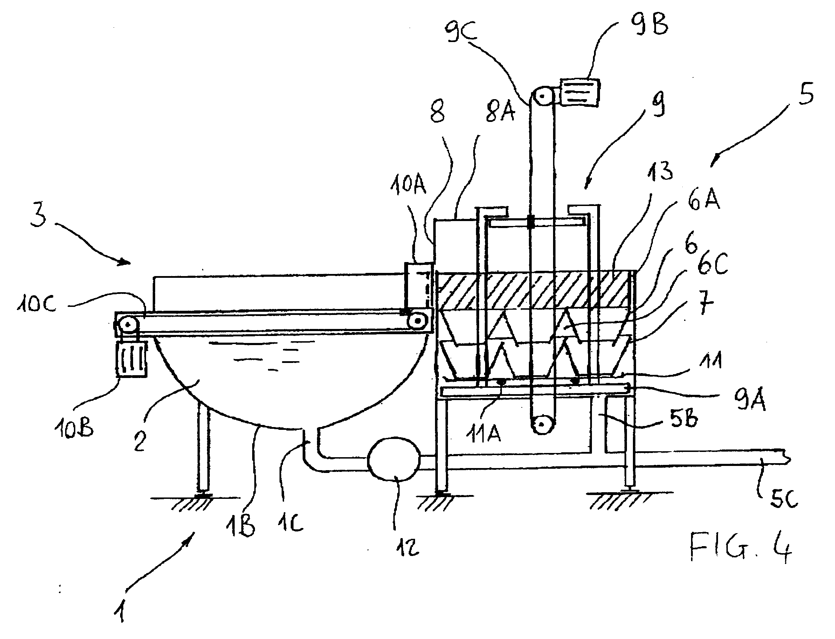

On the first container 1B, along the side means 3 there are provided transferring means 10 comprising, for example a push bar 10A coupled with driven means 10B translating by linear transmission means 10C and movable between a neutral position against the board 3 (Figure 2) and an operative stop position (Figures 4, 5, and 6) at the interface between the agglomeration station 1 and the extraction station 5 in the area around the shutter 8, when the latter is pulled down.

Operation is as follow: the first container 1B is, at the beginning, filled by whey 2 and, after heating and agitating for 10-15 minutes, ricotta comes out. After a certain period of stiffening, the ricotta forms a layer 13 which is floating, well defined and compact enough to be laterally moved without flaking. Meanwhile, while the shutter 8 is still in a close position, the second container 5A is filled with the auxiliary liquid 2B up to the same level of the liquid 2 in the container 1B. Subsequently the shutter 8 is opened: then it is possible to proceed in to two different operationg manners.
- In a first operating manner, the pump 12 is driven and generates a flow of liquid such as to move the layer at the extraction station.
- In a second manner, the driving means 10 are driven to move the layer. It is to be understood that the driving means may be missing and be replaced by manual pushing means.

The transferring speed is critical and the transferring do not have to happen in abrupt manner, otherwise the ricotta is damaged.

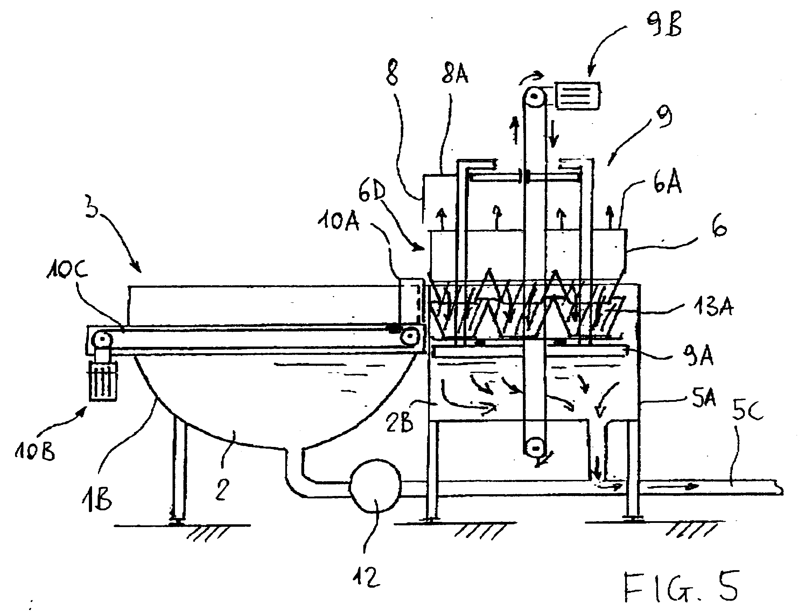

The two operating manners mentioned above may also be carryed out simultaneously. With the layer 13 transferred at the extraction station 5 limited by the walls 6A along three side and by the pushing means 10A along the remaining side, extraction is started and may be carryed out with three different manner as follow.
- Lifting the frame means 9 with the shelf means 11 and the conveyor means 6. First the conveyor means separate the layer with their edges 6B in the portions of layer 13A (Figure 5), then, continuing the lifting, the portions 13A are unloaded into the underneath basket means 7.
- Emptying the second container of the liquid.
- Lifting the frame means with the shelf means and the basket means while the second container is progressively emptyed.

When all of the ricotta has come down into the basket means 7, and the shelf means has been led to the level of the upper edge of the second container, the conveyor means 6 are further lifted to come off from the underneath basket means 7, in such a way as to be able to extract the shelf means 11 which roll on the rolling means 11A and get into the single baskets extracting them from the shelf means.

## Claims

1. Method for extracting a dairy product from whey comprising the phases of:
- heating and agitating a liquid comprising said whey in an agglomeration station for progressively obtaining substantially solid parts of product floating in said liquid;
- extracting said parts from said liquid;
characterized in that it further comprises, before said extracting, transferring said parts from said agglomeration station to an extraction station.

2. Method according to claim 1, wherein said obtaining comprises obtaining from said parts a layer of product foating on said mass before said transferring.

3. Method according to claim 1, or 2, wherein said parts are transferred by exerting a mechanic pushing against them.

4. Method according to any one of claims 1 to 3, wherein said parts are transferred by moving said liquid from said agglomeration station to said extraction station.

5. Method according to any one of the preceding claims, wherein said extracting comprises severing said layer in portions.

6. Method according to claim 5, wherein after said severing, said portions are introduced into respective basket means.

7. Apparatus for exstracting a dairy product from whey comprising:
- heating means arranged to heat and agitating means arranged to agitate a liquid comprising said whey in an agglomeration station in such a way as to allow progressive production of substantially solid parts of product floating in said liquid;
- extracting means arranged to extract said parts from said liquid;
characterized in that it further comprises transferring means arranged to transfer said parts from said agglomeration station to an extraction station.

8. Apparatus according to claim 7, wherein said agglomeration station comprises side means arranged to contain said parts.

9. Apparatus according to claim 7, or 8, wherein between said agglomeration station and said extraction station, are interposed shutter means arranged to prevent said parts from moving toward said extraction station in an uncontrolled way.

10. Apparatus according to any one of claims 6 to 9, wherein said transferring means comprise pushing means arranged to act against a lateral area of said parts.

11. Apparatus according to any one of claims 6 to 10, wherein said transferring means comprise pump means to move said liquid from said agglomeration station to said extraction station.

12. Apparatus according to any one of claims 7 to 11, wherein said extracting means comprise conveyor means arranged to convey said parts toward basket means.

13. Apparatus according to any one of the claims 7 to 12, wherein said conveyor means have upper edges arranged to sever said layer in portions.

14. Apparatus according to claim 12, or 13, wherein said basket means are placed below said conveyor means and both said basket means and said conveyor means are initially placed below said parts.

15. Apparatus according to claim 14, wherein said conveyor means comprise walls converging toward upper openings of said basket means.

16. Apparatus according to claim 15, wherein said basket means and said conveyor means are coupled with vertical driving means arranged to move said basket means and said conveyor means between a non-operative position underneath said parts and an operative position in which they interact with said parts to lift them.

17. Apparatus according to any one of claims 7 to 16, wherein said whey is contained in first containing means for containing said liquid.

18. Apparatus according to one of the claims 7 to 17, wherein said extraction station comprises second containing means hydraulically connected to said first containing means.

19. Apparatus according to claims 17 and 18 wherein said first containing means comprise an upper edge coupled with said side means by junction means, said upper edge having a curvilinear shape in plan and said side means having a substantially rectangular shape in plan.

20. Apparatus according to claim 19, wherein said second containing means have a shape in plan corresponding to the shape in plan of said side means.
